# EUROPEAN PATENT APPLICATION

(11) **EP 4 160 768 A1**
(43) Date of publication of application: **05.04.2023**
(21) Application number: 22198276.2
(22) Date of filing: 28.09.2022
(51) Int. Cl.: H01M 10/0525, H01M 10/44, H01M 10/48, H01M 50/213, H01M 50/227, H01M 50/247, H01M 50/267, H01M 50/284, H01M 50/536, H01M 50/581, H01M 10/42

(54) **BATTERY PACK AND ELECTRIC TOOL COMPRISING SAME**

(30) Priority: 30.09.2021 CN 202122389415 U
(71) Applicant: Techtronic Cordless GP, Anderson, SC 29621 (US)
(72) Inventor: LEE, Hei Man, Kwai Chung (HK); FAUTEUX, Denis Gaston, Kwai Chung (HK); WANG, Nan, Dongguan City (CN)
(74) Representative: Novagraaf Group

(57) **Abstract**

Disclosed in the present utility model is a battery pack (1), the battery pack (1) comprising a housing assembly (2), a battery set (3) and a control circuit (4); the battery set (3) comprises at least two battery subsets, the battery subsets being connected in series to form the battery set (3), each battery subset comprising at least two battery units connected in parallel, the battery units being battery units with the same nominal voltage but different capacities, each battery unit having an electrode terminal protruding from an end thereof, and each electrode terminal being electrically connected to the control circuit (4) via a connecting plate, such that the control circuit (4) is electrically connected to the battery set (3) to control the battery set (3). Also disclosed is an electric tool comprising such a battery pack (1).

## Description

### Technical Field

The present utility model relates to a battery pack, comprising a battery set formed of at least two battery subsets connected in series, the battery subset comprising at least two battery units connected in parallel. The present utility model also relates to an electric tool comprising such a battery pack.

### Background Art

The rise of consumer electronics and the energy revolution have spurred the development of lithium ion batteries. As modern electronic technology develops and miniaturized devices and tools steadily increase in number, market demand for and industrial production of lithium ion secondary batteries is also steadily increasing. Electric tools in particular have become much more convenient as a result of the development of battery technology, as battery packs containing rechargeable secondary batteries can be fitted to handheld electric tools, thereby avoiding the need for electric cables.

It is desirable that battery packs for electric tools have a low weight and a compact size, to make it easier for handheld electric tools to have a reduced total weight and a smaller size overall. Furthermore, different electric tools have different power or current or voltage requirements; thus, in response to these requirements, it is hoped that battery packs capable of meeting electric tools' power or energy needs can be developed.

To achieve this, there is a need in the art for a battery pack that has a compact design and meets the power or energy needs of a handheld electric tool, and an electric tool comprising such a battery pack. The electric tool may be a handheld electric tool.

### Summary of the Utility Model

An objective of the present application is to provide a battery pack that has a compact design and meets the power or energy needs of a handheld electric tool, and a handheld electric tool comprising such a battery pack. By using the battery pack of the present application, space in the battery pack can be saved and fully utilized, the compactness and versatility of the battery pack can be increased, and the manufacturing cost of the battery pack can be significantly reduced. By matching battery units or cells with different type numbers or capacities in different ways based on the application or energy needs of a handheld electric tool, a battery pack suitable for the handheld electric tool is conveniently designed, with no need to specially design a storage battery secondary battery unit or cell with a particular capacity; full use can be made of existing or commercially available battery units or cells, thereby significantly reducing the cost of the battery pack, which is well-suited to different application scenarios of the handheld electric tool.

According to one aspect of the present utility model, a battery pack is provided, the battery pack comprising a housing assembly, a battery set and a control circuit; the battery set comprises at least two battery subsets, the battery subsets being connected in series to form the battery set, each battery subset comprising at least two battery units connected in parallel, the battery units in the same battery subset being battery units with the same nominal voltage but different capacities, each battery unit having an electrode terminal protruding from an end thereof, and each electrode terminal being electrically connected to the control circuit via a connecting plate, such that the control circuit is electrically connected to the battery set to control the battery set.

In a solution according to one aspect of the present utility model, the control circuit comprises a charging circuit, which controls cell balance among the battery units during charging of the battery pack.

In a solution according to one aspect of the present utility model, the battery pack further comprises a temperature sensor and a current sensor, and the control circuit is configured to break the electrical connection of the battery pack when the temperature sensor indicates an excessively high temperature or the current sensor indicates an excessively large current.

In a solution according to one aspect of the present utility model, the parallel-connected battery subsets are connected in series in a longitudinal direction A, the battery subset comprises battery units with at least two different capacities, battery units of each type are arranged in a row in the longitudinal direction, and battery units with different capacities in different rows are staggered with respect to each other.

In a solution according to one aspect of the present utility model, the parallel-connected battery subsets are connected in series in the longitudinal direction, and each battery subset comprises three battery units, the battery units having different capacities or dimensions and being staggered in the longitudinal direction.

In a solution according to one aspect of the present utility model, the electrode terminal is electrically connected to the connecting plate by laser welding, resistance welding or ultrasonic welding.

In a solution according to one aspect of the present utility model, the housing assembly is made of a plastic material selected from PP, ABS, PC, PA, LCP, PPS or PEEK.

In a solution according to one aspect of the present utility model, the battery unit comprises a set selected from the following: a type lithium ion cylindrical battery unit; a type lithium ion cylindrical battery unit; and a type lithium ion cylindrical battery unit.

In a solution according to one aspect of the present utility model, a positive electrode active material used in the battery unit comprises a ternary material, NCA material, lithium iron phosphate, lithium cobalt oxide or lithium manganese oxide; and a negative electrode active material used in the battery unit comprises graphite, lithium titanate, or a low-crystallinity carbon such as soft carbon black or hard carbon black.

In a solution according to one aspect of the present utility model, the battery pack comprises a unit support, the unit support comprising at least an upper-level unit support and a lower-level unit support which are offset relative to each other.

According to another aspect of the present utility model, a handheld electric tool is provided, comprising the battery pack according to the abovementioned aspect of the present utility model.

By reading the following detailed description and referring to the drawings, a clear understanding of other features and advantages of the present utility model will be gained.

### Brief Description of the Figures

The following detailed description in conjunction with the drawings will clarify the objective and features of the present utility model. However, it should be understood that the drawings are designed for illustration only, and are not intended to limit the present utility model.
Fig. 1 is a three-dimensional drawing of the battery pack according to an embodiment of the present utility model.
Fig. 2 is an exploded perspective view of the battery pack according to an embodiment of the present utility model.
Fig. 3 is a partial perspective view of the battery set of the battery pack according to an embodiment of the present utility model.
Fig. 4 is a schematic simplified circuit diagram of the circuit of the battery pack according to an embodiment of the present utility model as shown in Fig. 3; and
Figs. 5 - 9 are simplified schematic diagrams of arrangements of different battery unit types in the battery pack according to an embodiment of the present utility model; and
Fig. 10 is a schematic side view of an embodiment of a unit support for the battery unit of of the battery pack of the present utility model.

### Detailed Description of Embodiments

The technical solution of the present application is described clearly and completely below with reference to the drawings; obviously, the described embodiments are some of, rather than all of, the embodiments of the present application. All other embodiments obtained by those of ordinary skill in the art based on the embodiments in the present application without creative effort shall fall within the scope of protection of the present application.

In the description of the present application, it must be explained that unless otherwise explicitly specified and defined, terms such as "connected" should be understood in a broad sense, e.g. may mean fixedly connected, removably connected or integrally connected, mechanically connected or electrically connected, directly connected or indirectly connected via an intermediary. To a person skilled in the art, the specific meaning of the above terms in the present application may be understood according to the particular circumstances. Additionally, in the description of the present application, unless otherwise stated, the meaning of "multiple" is two or more. It should also be understood that the orientation or positional relationship indicated by the terms "central", "longitudinal", "transverse", "upper", "lower", "front", "rear", "left", "right", "vertical", "horizontal", "top", "bottom", "inner", "outer", "axial", "radial", "circumferential", etc. is based on the orientation or positional relationship shown in the accompanying drawings, which is merely for ease of description of the present application and simplification of the description, and is not intended to indicate or imply that the device or component referred to must have a particular orientation or be constructed and operated in a particular orientation. Therefore, this should not be construed as limiting the present application.

In the description of this specification, descriptions with reference to terms such as "an embodiment", "some embodiments", "an example", "a specific example", or "some examples" mean that specific features, structures, materials or characteristics described in conjunction with the embodiments or examples are included in at least one embodiment or example of the present application. In this specification, the schematic expressions of the described terms do not necessarily refer to the same embodiments or examples. Furthermore, the specific features, structures, materials or characteristics described may be combined in a suitable manner in any one or more embodiments or examples.

In order to make it easer for those skilled in the art to understand the technical solution of the present utility model, the technical solution of the present utility model will now be further described in conjunction with the accompanying drawings, in which identical reference numerals denote the same or similar elements.

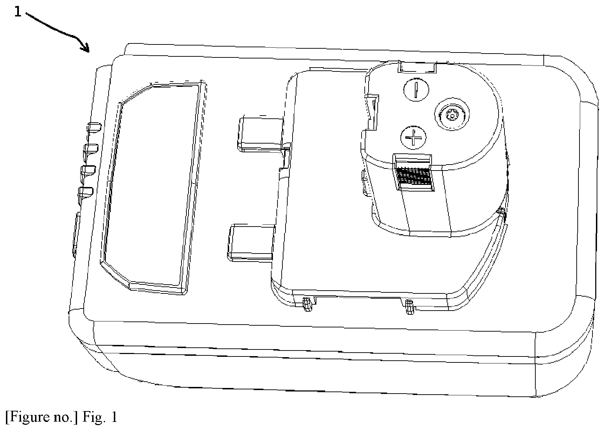

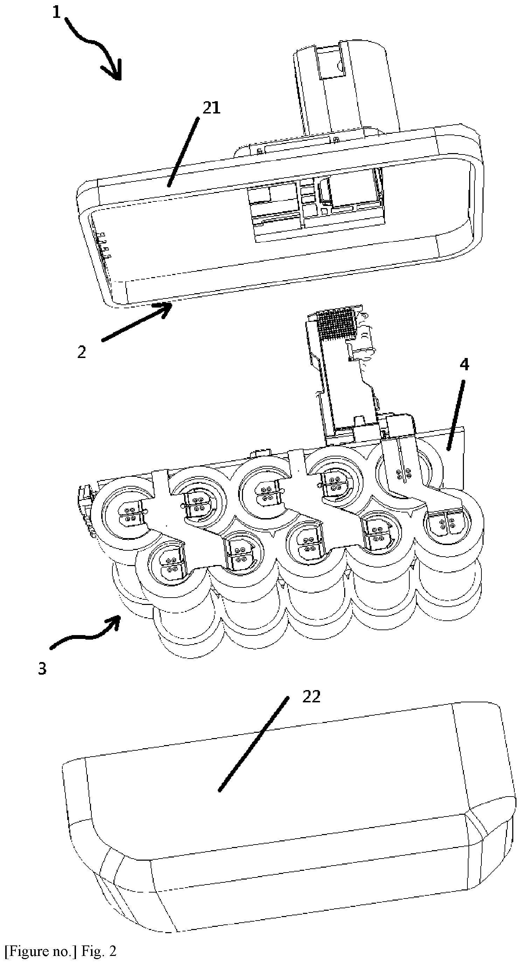

Now referring to the drawings, Fig. 1 is a three-dimensional drawing of a battery pack 1 according to an embodiment of the present utility model. Fig. 2 is an exploded perspective view of the battery pack 1 according to an embodiment of the present utility model. In an exemplary embodiment of the present utility model, the battery pack 1 comprises a housing assembly 2, a battery set 3 and a control circuit 4. The housing assembly 2 comprises an upper housing 21 and a lower housing 22; the battery set 3 and control circuit 4 are accommodated in a space enclosed by the upper housing 21 and lower housing 22. The housing assembly 2 is preferably made of a plastic material which is not electrically conductive but has good thermal conductivity. The plastic material is for example PP, ABS, PC, PA, LCP, PPS, PEEK, etc. The housing assembly advantageously transmits the heat generated by the battery set outwards, thereby avoiding overheating of the battery pack. The control circuit 4 is electrically connected to the battery set 3 to control the charging and discharging of the battery set 3.

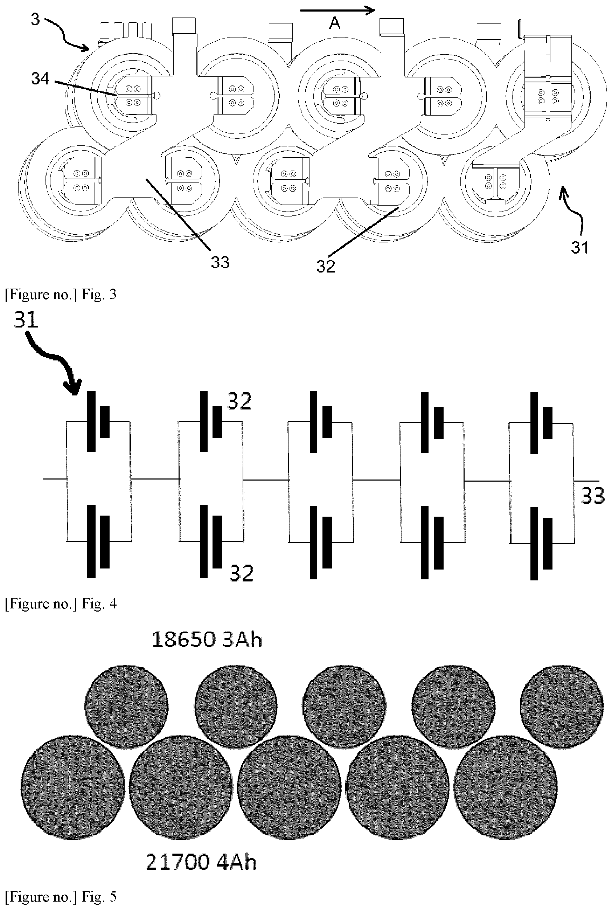

Fig. 3 is a partial perspective view of the battery set 3 of the battery pack 1 according to an embodiment of the present utility model. As shown in Figs. 2 - 3, the battery set 3 comprises at least two battery subsets 31; the battery subsets 31 are connected in series to form the battery set 3. Fig. 4 shows a schematic simplified circuit diagram of the circuit of the battery pack according to an embodiment of the present utility model as shown in Fig. 3. In an embodiment of the present utility model, each battery subset 31 comprises at least two battery units 32 connected in parallel.

In an embodiment of the present utility model, each battery subset 31 is the same. In a preferred embodiment, the battery units 32 in the same battery subset 31 have the same nominal voltage, but have different capacities. In an embodiment of the present utility model, the battery unit 32 is a lithium ion secondary battery unit. For example, in an embodiment of the present utility model, graphite or hard carbon black or soft carbon black is used for a negative electrode of the lithium ion secondary battery unit, and iron phosphate lithium oxide (LFP) is used for a positive electrode; and the lithium ion secondary battery unit has a nominal voltage of 3.2 V. For example, in an embodiment of the present utility model, graphite or hard carbon black or soft carbon black is used for the negative electrode of the lithium ion secondary battery unit, and a lithium oxide of LCO, NMC, NCA, etc. is used for the positive electrode; and the lithium ion secondary battery unit has a nominal voltage of 3.6 V. As an example, a positive electrode active material used in the battery unit comprises a ternary material, NCA material, lithium iron phosphate, lithium cobalt oxide or lithium manganese oxide; and a negative electrode active material used in the battery unit comprises graphite, lithium titanate, or a low-crystallinity carbon such as soft carbon black or hard carbon black.

Continuing to refer to Fig. 3, each battery unit 32 has an electrode terminal 34 located at an end thereof, each electrode terminal 34 being electrically connected to the control circuit 4 via a connecting plate 33. In an embodiment of the present utility model, the electrode terminal 34 is electrically connected to the connecting plate 33 by laser welding, resistance welding or ultrasonic welding, etc.

In an embodiment of the present utility model, the battery subsets 31 are connected in series in a longitudinal direction A, and the battery subset 31 comprises multiple parallel-connected battery units 32 with at least two different capacities; battery units 32 of each type are arranged in a row in the longitudinal direction, and the battery units 32 with different capacities in different rows are staggered with respect to each other. Battery units of different capacities may have different dimensions, including length and diameter.

In an embodiment of the present utility model, when the battery pack 1 has an output voltage of 18 V, 5 series-connected battery subsets 31 are preferably used, each battery subset comprising lithium ion secondary battery units with a nominal voltage of 3.6 V. Within the same battery subset 31, the lithium ion secondary battery units are connected in parallel; as long as these battery units have approximately equal nominal or operating voltage ranges, the effect of the present utility model can be achieved. The lithium ion secondary battery units may also be cylindrical. Examples of the cylindrical shape are type 18650 with diameter 18 mm and length 65 mm, type 21700 with diameter 21 mm and length 70 mm, and type 26650 with diameter 26 mm and length 65 mm.

In an embodiment of the present utility model, based on the power or energy demands of an electrical apparatus (e.g. a handheld electric tool), a battery pack suitable for the particular scenario can be simply designed. For example, a handheld electric tool requires 7 Ah of energy; if battery units with exactly the same capacity or type number are used in parallel connection with each other, each battery unit will need to have a capacity of 3.5 Ah. However, storage battery secondary battery units with a capacity of 3.5 Ah might be very rare on the market; if a design is used in which battery units with exactly the same capacity are connected in parallel, it might be necessary to specially design and manufacture storage battery secondary battery units specifically intended for this demand. This means that the cost might be increased and the production cycle might be lengthened, and so on.

In the present utility model, in view of the fact that the power or energy needs of electric tools might be diverse, and it might not be practical to specially design battery units or cells, the present application proposes a scheme whereby battery units with different capacities are used in parallel connection with each other. For example, for a 7 Ah energy demand, a storage battery secondary battery unit with a capacity of 3 Ah and a storage battery secondary battery unit with a capacity of 4 Ah may be connected in parallel in the present utility model. For example, in an embodiment of the present utility model, referring to Fig. 5, in each battery subset 31, a type 18650 battery unit with a capacity of 3 Ah and a type 21700 battery unit with a capacity of 4 Ah are connected in parallel. In an embodiment of the present utility model, the type 18650 battery unit with the capacity of 3 Ah has a lower power, while the type 21700 battery unit with the capacity of 4 Ah has a higher power; thus, by connecting 5 such battery subsets 31 in series, a battery pack with a capacity of 7 Ah and a voltage of 18 V is obtained.

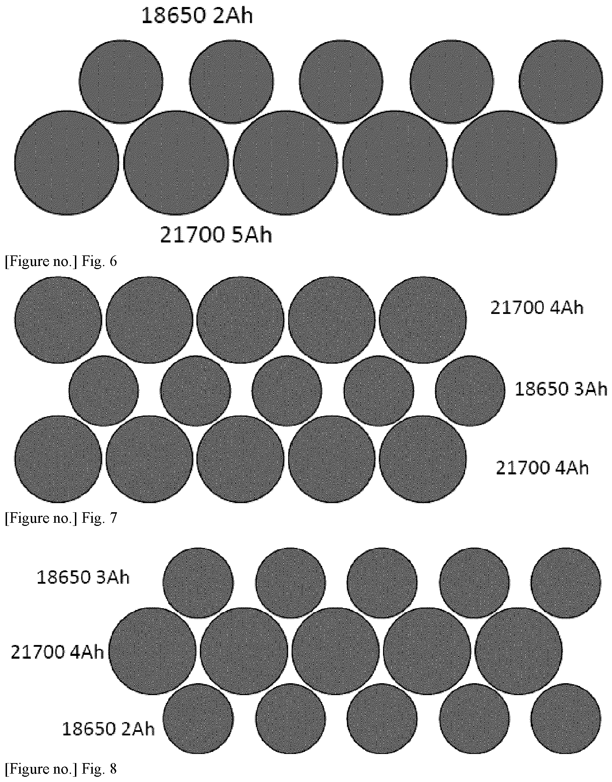

Referring to Fig. 6, in each battery subset 31, a type 18650 battery unit with a capacity of 2 Ah and a type 21700 battery unit with a capacity of 5 Ah are connected in parallel, and a battery pack with a capacity of 7 Ah and a voltage of 18 V can likewise be obtained. Thus, based on the application or energy needs of a handheld electric tool, the battery of the present utility model can be conveniently designed to suit the handheld electric tool according to the battery units available, with no need to specially design a storage battery secondary battery unit or cell of a particular capacity.

As a further example, as shown in Fig. 7, the battery pack employs a scheme whereby 5 battery subsets 31 are connected in series. In each battery subset 31, 3 battery units are connected in parallel, and a higher energy output can thereby be obtained; for example, the battery pack in Fig. 7 has an energy output of 10 Ah. Fig. 8 similarly shows a battery pack in which 3 battery units are connected in parallel in each battery subset 31, wherein the battery pack has an energy output of 9 Ah. For example, by configuring battery units with different type numbers or capacities, the cost of the battery pack can be considerably lowered, because battery units with certain type numbers or capacities can have a significantly lower cost, while battery units with other type numbers or capacities can provide higher power or energy or other significant advantages, etc., and a battery pack obtained in this way combines the advantages of these battery units.

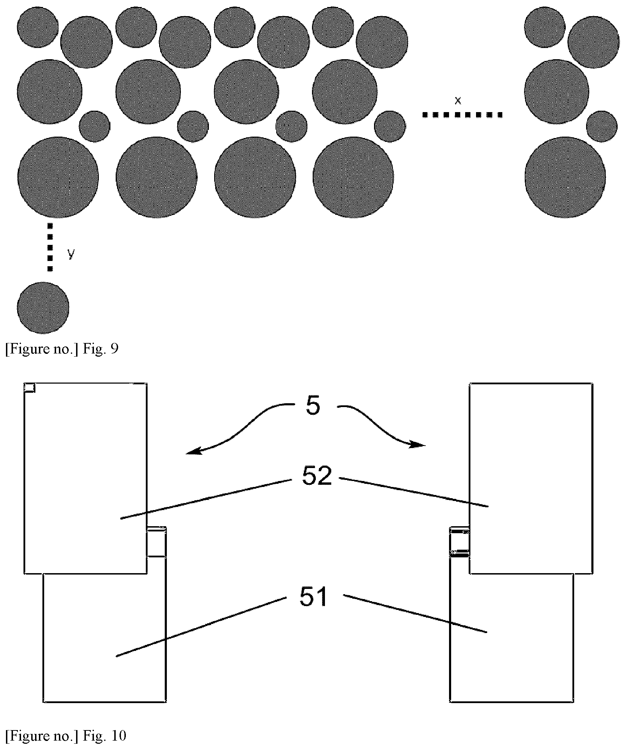

As shown in Fig. 9, the battery pack in the present utility model may use x battery subsets 31 connected in series, and may use y battery units 32 connected in parallel in each battery subset 31, wherein x and y are both integers greater than or equal to 2. By matching battery units 32 with different type numbers or capacities in different ways based on the application or energy needs of a handheld electric tool, a battery pack suitable for the handheld electric tool is conveniently designed, with no need to specially design a storage battery secondary battery unit or cell with a particular capacity; full use can be made of existing or commercially available battery units or cells, the cost of the battery pack can be significantly reduced, and the versatility of the battery pack can be increased.

Furthermore, referring to Figs. 5 - 9, in the battery pack, battery units 32 of each type are arranged in a row in the longitudinal direction, and the battery units with different type numbers or capacities in different rows are staggered with respect to each other. This manner of arrangement can make full use of the space between the battery units 32, such that the battery units are arranged more compactly overall; in this way, space in the battery pack can be saved and optimized, and the dimensions of the battery pack can be reduced. Because battery units with different type numbers or capacities or resistances or capacitances in different rows are staggered with respect to each other, heat among them can be dissipated more optimally, so this manner of arrangement of the battery units facilitates battery pack heat management.

Fig. 10 shows an embodiment of a unit support 5 for the battery unit of the present utility model. It will be understood that two unit supports 5 are provided to accommodate left and right ends of the battery unit. The unit support 5 comprises a lower-level unit support 51 and an upper-level unit support 52. Because the battery units have different dimensions, the lower-level unit support 51 is offset inwards relative to the upper-level unit support 52, to accommodate a shorter battery unit. The offset amount is approximately half of the difference in length between the shorter battery unit and the longer battery unit, such that the left and right unit supports together can effectively accommodate the battery units of different lengths. The lower-level unit support and upper-level unit support are preferably integrally formed by injection moulding. It will be understood that because the lower-level unit support is offset inwards, a battery casing can be made narrower at a corresponding part, so that a more compact battery pack (e.g. with a roughly trapezoidal casing) can be provided.

In an embodiment of the present utility model, the battery pack 1 further comprises a temperature sensor not shown in the drawings, the temperature sensor being configured to sense the internal temperature of the battery pack. When the temperature sensor senses an excessively high temperature, the control circuit 4 breaks the electrical connection of the battery pack 1 according to input from the temperature sensor. In an embodiment of the present utility model, the electrical connection of the battery pack 1 can be broken by means of software or hardware. In an embodiment of the present utility model, the battery pack 1 further comprises a current sensor not shown in the drawings. When the current sensor senses a current exceeding some threshold, the control circuit 4 breaks the electrical connection of the battery pack 1 according to input from the current sensor, thereby preventing damage to the battery pack 1 or serious damage to the battery units 33.

In an embodiment of the present utility model, the battery pack 1 further comprises a charge display means, which is able to display the remaining charge of the battery pack 1 and thereby provide the operator with a visual indication.

In an embodiment of the present utility model, the battery pack is suitable for handheld electric tools with different power or energy needs, so is highly versatile.

The above-described embodiments are merely used for illustrating, rather than limiting, the technical solution of the present application. Although the present application has been illustrated in detail with reference to the foregoing embodiments, those of ordinary skill in the art should understand that the technical solutions described in the foregoing embodiments may still be modified, or some or all of the technical features therein may be equivalently replaced, without departing from the scope of the present application.

## Claims

1. Battery pack (1), the battery pack (1) comprising a housing assembly (2), a battery set (3) and a control circuit (4), **characterized in that** the battery set (3) comprises at least two battery subsets (31), the battery subsets (31) being connected in series to form the battery set (3), each battery subset (31) comprising at least two battery units (32) connected in parallel, the battery units (32) in the same battery subset (31) being battery units (32) with the same nominal voltage but different capacities, each battery unit (32) having an electrode terminal (34) at an end thereof, each electrode terminal (34) realizing an electrical connection via a connecting plate (33), and the control circuit (4) being electrically connected to the battery set (3) to control the battery set (3).

2. Battery pack (1) according to Claim 1, **characterized in that** the control circuit (4) comprises a charging circuit, which controls cell balance among the battery units (32) during charging of the battery pack (1).

3. Battery pack (1) according to Claim 1 or 2, **characterized in that** the battery pack (1) further comprises a temperature sensor and a current sensor, and the control circuit (4) is configured to break the electrical connection of the battery pack (1) when the temperature sensor indicates an excessively high temperature or the current sensor indicates an excessively large current.

4. Battery pack (1) according to Claim 1 or 2, **characterized in that** the battery subsets (31) are connected in series in a longitudinal direction (A), the battery subset (31) comprises parallel-connected battery units (32) with at least two different capacities, and battery units (32) with different capacities are staggered in the longitudinal direction.

5. Battery pack (1) according to Claim 1 or 2, **characterized in that** battery units (32) with different capacities have different dimensions.

6. Battery pack (1) according to Claim 1 or 2, **characterized in that** the electrode terminal (34) is electrically connected to the connecting plate (33) by laser welding, resistance welding or ultrasonic welding.

7. Battery pack (1) according to Claim 1 or 2, **characterized in that** the housing assembly (2) is made of a plastic material selected from PP, ABS, PC, PA, LCP, PPS or PEEK.

8. Battery pack (1) according to Claim 1 or 2, **characterized in that** the battery unit (32) comprises a set selected from the following: a type 18650 lithium ion cylindrical battery unit (32); a type 21700 lithium ion cylindrical battery unit (32); and a type 26650 lithium ion cylindrical battery unit (32).

9. Battery pack (1) according to Claim 8, **characterized in that** the battery pack comprises a unit support, the unit support comprising at least an upper-level unit support and a lower-level unit support which are offset relative to each other.

10. Electric tool, **characterized by** comprising the battery pack (1) according to any one of Claims 1 - 9.
